# EUROPEAN PATENT SPECIFICATION

(11) **EP 1 303 718 B1**
(45) Date of publication and mention of the grant of the patent: **11.10.2006**
(21) Application number: 01939458.4
(22) Date of filing: 25.05.2001
(51) Int. Cl.: G05D 16/06

(54) **PRESSURE REGULATING PISTON WITH BUILT IN RELIEF VALVE**
DRUCKREGULIERENDER KOLBEN MIT EINGEBAUTEM ÜBERDRUCKVENTIL
PISTON DE REGULATION DE PRESSION POSSEDANT UNE SOUPAPE DE DETENTE INTEGREE

(30) Priority: 25.05.2000 US 207079 P
(43) Date of publication of application: 23.04.2003
(73) Proprietor: ASCO Controls, L.P., Florham Park, NJ 07932 (US)
(72) Inventor: ALBRIGHT, John, Edward, Hackettstown, NJ 07840 (US)
(74) Representative: Hale, Peter
(86) International application number: PCT/US2001/017008
(87) International publication number: WO 2001/090617

(56) References cited:
- WO-A-99/06679
- US-A- 2 826 213
- US-A- 3 906 982
- US-A- 4 217 870
- US-A- 4 754 778
- US-A- 4 760 833
- US-A- 5 307 834

## Description

### FIELD OF THE INVENTION

This invention relates generally to engine valve apparatus and, more particularly, to a pressure regulating piston valve with a built in relief valve.

### BACKGROUND OF THE INVENTION

As engine manufacturers reduce exhaust emissions, crankcase blow-by vented to the atmosphere has become a larger contributor to the total emissions. Crankcase blow-by is produced when combustion gases, under high pressure, become contaminated with oil mist when blown past the piston rings into the crankcase. To further reduce the total emissions of engines, it has become necessary to rout these gases into the air intake system. In a closed system, this contaminated blow-by is ingested by the engine intake system.

Interest in closed crankcases is being driven both by regulatory as well as operating concerns. As of January 1, 1998, the U.S. Environmental Protection Agency (EPA) required that all gaseous-fueled on-highway engines must have a closed crankcase. While there are as yet no specific regulations on closing the crankcases of diesel engines, the overall drive to reduce emissions has made most engine and equipment manufacturers become more interested in closing their crankcases.

In a closed crankcase system, crankcase blow-by gases, which inherently cause a rise in crankcase pressure, need to be routed back into the engine intake system. Excessive variations in crankcase pressure can damage seals and cause a loss of oil. There is a perceived need for a pressure regulator to minimize variation in crankcase pressure. There is also a perceived need for a relief valve to protect against overpressure in the crankcase that cannot be compensated for by the regulator itself.

U.S. Pat. No. 4754778 discloses a pressure relief diaphragm type regulator valve that includes a velocity boost body having an annular-shaped wrap-around pitot tube communicating with the vena contracta of a flowpath. The pressure at the vena contracta is communicated to the diaphragm by a small registration orifice in the boost body. The boost body defines a large relief orifice open to the annular pitot tube, but normally closed off from the diaphragm by a flapper. Under a rapid excess pressure condition, the flapper uncovers the relief orifice and large volume flow is permitted to the diaphragm.

WO 99/06679 discloses a valve for sucking up gases from an internal combustion engine crankcase (10) comprising a body (14, 16), a gas intake duct (32) connected to the crankcase inner space (12), a gas evacuating duct (28) connected to an air sucking duct of the internal combustion engine and a membrane (18) dividing the valve body (14, 16) into an inner chamber (22) on the crankcase side and an outer chamber (24) and having a suction valve attachment (34). Said membrane (18), jointly with the suction valve attachment (34), opens or closes at will the gas evacuating duct (28) according to the pressure difference between the two chambers (22, 24). The valve body (14, 16) outer chamber (24) is connected to the gas intake duct (32) and a ventilating duct (26) is provided on the crankcase side, said duct connecting the inner chamber (22) valve body (14, 16) on the crankcase side, to ambient pressure.

US 2,826,213 relates to a gas control valve; US 4,217,870 relates to a venting valve for crankcases; DE 4406986 relates to a reciprocating internal combustion engine; and EP 0730086 relates to a cyclone separator for crankcase ventilation.

In addition, US 3,906,982 relates to a pressure regulator assembly; US 4,760,833 relates to a vacuum check valve for an engine crankcase; and US 5,307,834 relates to a combined gas flow control regulator and pressure relief valve.

The present invention is directed to overcoming, or at least reducing the effects of, one or more of the issues set forth above.

### SUMMARY OF THE INVENTION

The present invention is set out in the independent claims. Some optional features are set out in the claims dependent thereto.

One aspect of the present invention provides a pressure-regulating valve for regulating pressure in a crankcase including a body, a movable piston, and a relief valve. The body has a fluid passageway therethrough. The movable piston is disposed within the body and is movable in response to pressures thereon to adjust a fluid flow through the fluid passageway. The relief valve is integral to the piston. At least one hole in the piston is exposed to a relief passageway upon the application of a predetermined level of pressure on the piston.

Another aspect of the present invention provides a pressure-regulating valve, including an upper body portion, a lower body portion, a movable piston a spool and a relief valve. The upper body portion is in fluid communication with a crankcase. The lower body portion isolated fluidly from the upper body portion and having a lower body fluid passageway therethrough in communication with a crankcase and a vacuum source. The movable piston is disposed within the upper body portion. The piston is movable in response to pressure thereon to adjust a fluid flow through the lower body fluid passageway. The spool connected to the piston and extending through the upper body portion and to the lower body portion.

Yet another aspect of the present invention provides a method of regulating pressure in a crankcase of an internal combustion engine. The method includes providing a crankcase valve responsive to crankcase pressure, wherein changes in crankcase pressure are communicated to the crankcase valve; adjusting a flow through the crankcase valve to correspondingly alter the crankcase pressure; and releasing overpressure in the crankcase through a relief valve integral to the crankcase valve upon application of a predetermined amount of pressure.

### BRIEF DESCRIPTION OF THE DRAWINGS

FIG 1 is a cross-sectional view of a valve design in accordance with one aspect of the invention.
FIG 2 is a top view of the design according to FIG 1.
FIG 3 is a cross-sectional view of an alternative valve design according to one aspect of the invention.
FIG 4 is a top view of the design according to FIG 3.
FIG 5 is a top view of a valve piston in accordance with one aspect of the invention.
FIG 6 is a cross-sectional view of the design according to FIG 5.
FIG 7 is a detail of the circled area of FIG 6.
FIG 8 is a cross-sectional view of a flow shaper design according to the invention.
FIG 9 is a top view of the design according to FIG 8.
FIG 10 is a side view of a plug in accordance with the invention.
FIG 11 is a top view of a relief disc design in accordance with the invention.
FIG 12 is a cross-sectional view of the relief disc shown in FIG 11.
FIG 13 is a top view of a sealing disc design in accordance with the invention.
FIG 14 is a side view of the sealing disc shown in FIG 13.
FIG 15 is a cross-sectional view of a proportioning spool in accordance with the invention.
FIG 16 is a cross-sectional view of an alternative embodiment for the valve in accordance with the invention.
FIG 17 is a top view of the valve shown in FIG 16.

### DETAILED DESCRIPTION OF THE INVENTION

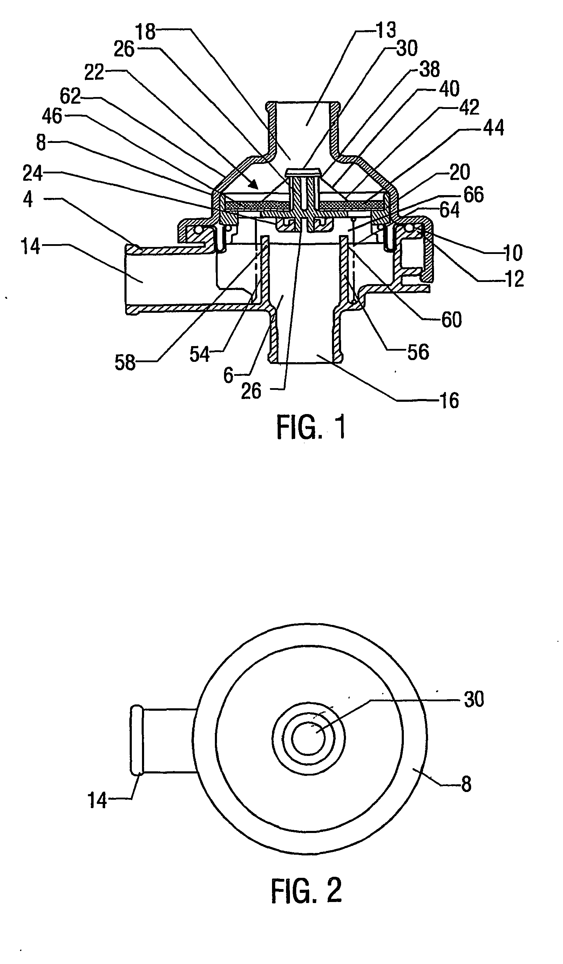

Turning now to the figures, and in particular to FIG 1, a pressure-regulating valve in accordance with one embodiment of the invention is disclosed. Pressure regulating valve may be used in equipment including, but not limited to, gas engines, diesel engines, generator sets and other power equipment. As shown in FIG 1, pressure-regulating valve includes a body with a fluid passageway extending therethrough. Fluid passageway may facilitate, for example, fluid communication between a crankcase (not shown) and a vacuum source (not shown). In the embodiment shown in FIG 2, fluid passageway exhibits an inlet and an outlet that are substantially normal to one another, but this is not necessarily so. In other embodiments discussed in more detail later in this disclosure the inlet and outlet are arranged parallel to one another. It will be understood by one of skill in the art with the benefit of this disclosure that inlet and outlet may be arranged in any convenient manner. In the embodiment of FIG 1, use of pressure regulating valve is integrated into a diesel engine (not shown) with a closed crankcase to facilitate reduced emissions.

Attached to body is a bonnet. A diaphragm, preferably a rolling diaphragm such as is available from Bellofram, Inc., is disposed between body and bonnet. Rolling diaphragm fits into a groove formed in body and provides a gas-tight seal between body and bonnet. Bonnet includes a relief flow passageway isolated from fluid passageway in normal operation. Relief flow passageway may lead directly to atmosphere, or it may lead back to an engine intake manifold (not shown).

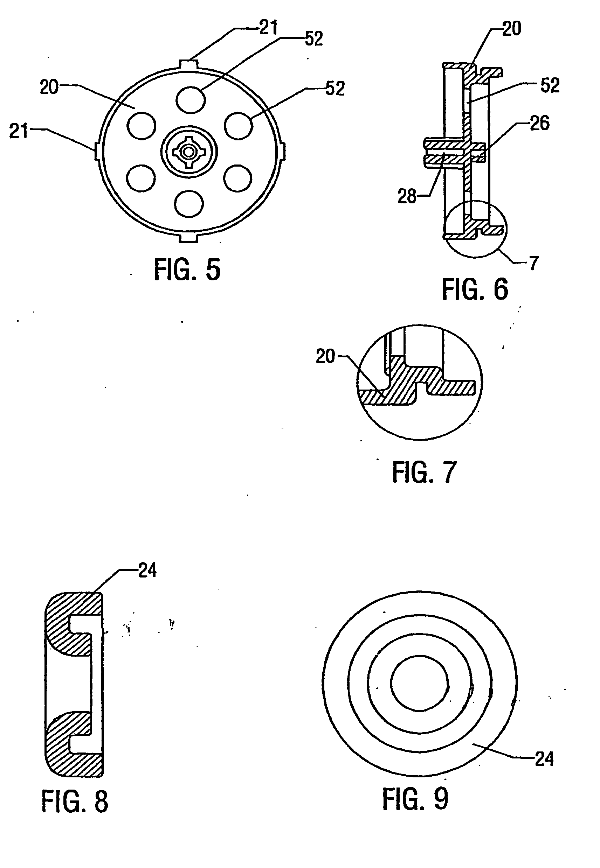

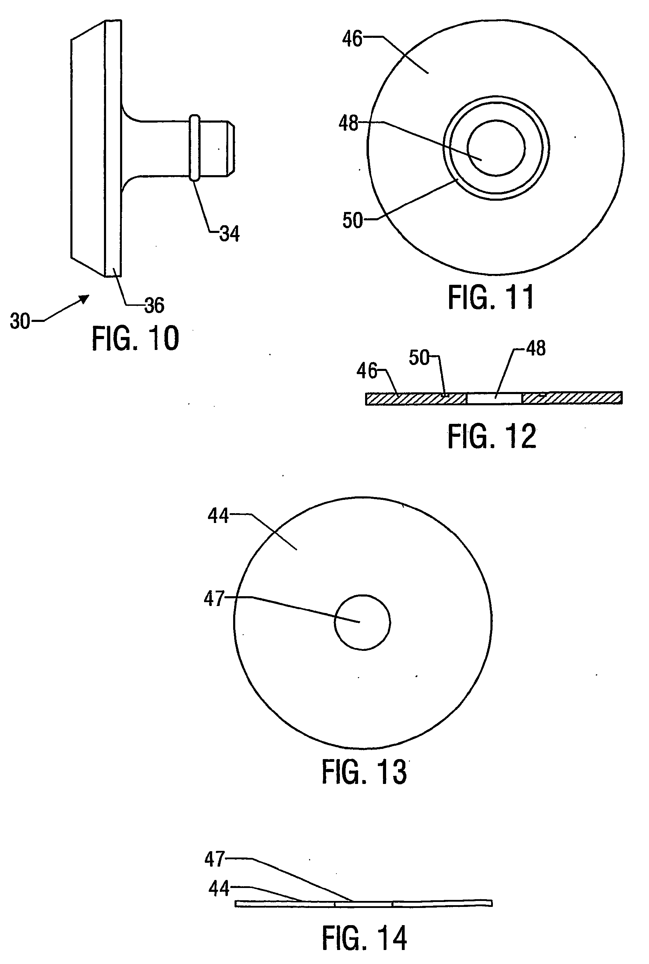

A movable piston assembly is disposed inside body and bonnet. Piston assembly includes a piston that is also part of an integrated relief valve. Piston includes at least one hole, for example the six holes equally spaced around the circumference of the piston as shown in FIG 5. Piston includes at least one guide/stop leg, for example the four guides/stops equally spaced around the circumference of the piston as shown in FIG 5, to guide piston inside bonnet and to stop piston travel on angled wall of bonnet. Piston is shown in some detail in FIGS 5-7. Piston assembly may also include a flow shaper attached to a nipple of piston. Flow shaper is shown in some detail on FIGS 8 and 9. Flow shaper may have a generally U-shaped cross-section and facilitates less turbulent flow through fluid passageway. Opposite nipple of piston is a channel receptive of a plug. Plug is shown in detail on FIG 10 and includes a stem with a raised portion(s) to facilitate attachment to piston. A head of plug retains a first end of a biasing member, such as a conical spring. Conical spring exhibits a second end that abuts relief disc. Relief disk is shown in detail in FIGS 11 and 12 and includes a hole to accommodate piston channel and includes a groove into which a second end of conical spring fits. Relief disk may comprise, but it not limited to, Ryton R-4XT.

Between relief disk and piston is a sealing disk. Sealing disk is shown in FIGS 13 and 14 and exhibits a hole that also accommodates piston channel. Sealing disk may comprise, but is not limited to, a Buna-N copolymer with durometer hardness. Sealing disk is sandwiched between piston and relief disk by a force provided by conical spring. Sealing disk seals holes in piston. When a sufficient predetermined force is applied to sealing disk from inside body, the force of conical spring may be overcome and allow for fluid communication between fluid passageway and relief flow passageway.

Body exhibits opposing internal walls and, which are parts of fluid flow passageway. First ends of internal walls, respectively, provide a limit to the travel of piston within body. In FIG 1, piston is in the full-open position with guide/stop legs abutting angled wall of bonnet. Piston may also travel between the position shown in FIG 1 and a position in which the piston abuts ends, closing off fluid communication between inlet and outlet of fluid flow passageway. A biasing member, for example coiled compression spring extending between piston and body, biases piston to an open position as described above with guide/stop legs of piston abutting angled wall of bonnet. Pressure, positive or negative, transmitted from, for example, the crankcase or vacuum source (not shown) may overcome the force supplied by coiled compression spring to move piston to the position shown in FIG 1, or to any position in between the closed position and the full open position of FIG 1. Rolling diaphragm seals the annulus between piston and either bonnet (in the full open position as shown in FIG 1) or body (in the closed position), or both bonnet and body.

The operation of pressure regulating valve is described as follows. Pressure-regulating valve may be positioned, for example, in a diesel engine comprising a closed crankcase (not shown). As the diesel engine runs some blow-by will occur and inherently cause the pressure in the closed crankcase to increase. It is desirable to keep the pressure in the crankcase regulated for reasons discussed in the background section. As the force on the piston due to crankcase pressure and coiled compression spring varies relative to the force on piston due to the vacuum source, piston travels advantageously toward either bonnet or ends of body. When this occurs a gap between ends and piston changes accordingly and regulates the flow past flow shaper and through fluid passageway, thus regulating the crankcase pressure. Thus, piston adjusts itself relative to the forces applied to it, by crankcase pressure, vacuum source, and coiled compression spring, to maintain a substantially constant pressure in the crankcase. In the event that the crankcase pressure exceeds the range under which pressure-regulating valve is intended to operate, integral relief valve opens, i.e. fluid communication between fluid flow passageway and relief flow passageway is established through holes of piston. The seal between holes and sealing disk breaks as pressure on the piston increases sufficiently to overcome the force on relief disk provided by conical spring.

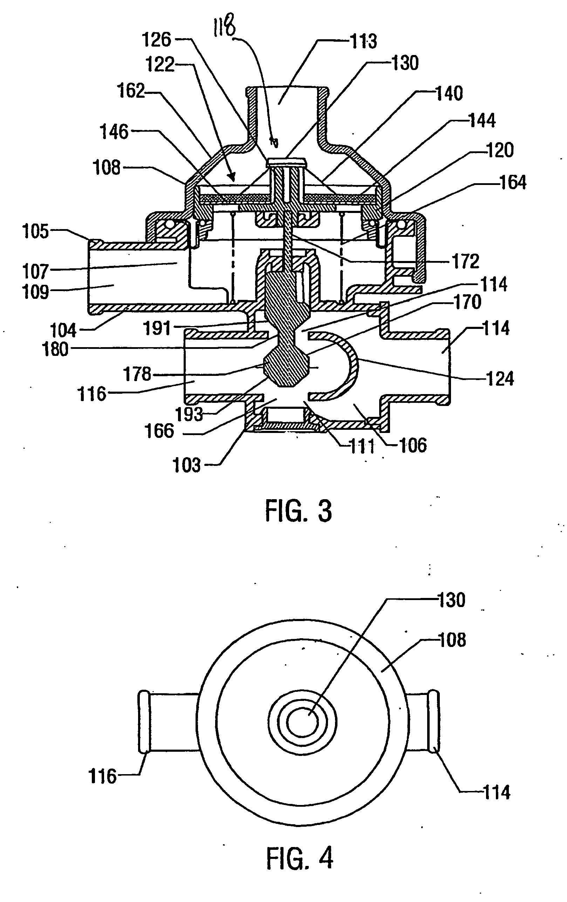

A second embodiment of the invention is similarly disclosed in FIGS 3, 4 and 15. In the embodiment shown in these figures, all of the components shown in FIG 1 are included in pressure-regulating valve, however, this second embodiment includes some modifications. Body of pressure-regulating valve includes an upper portion and a lower portion. Lower portion includes a fluid passageway with an inlet and outlet substantially parallel to one another. Fluid passageway may facilitate, for example, fluid communication between a crankcase (not shown) and a vacuum source (not shown). It will be understood by one of skill in the art with the benefit of this disclosure that the arrangement of the inlet and outlet may be adjusted as necessary to fit within the engine parameters. Upper portion includes a fluid passageway with an inlet. Inlet may facilitate, for example, fluid communication between a crankcase and fluid passageway. A flow shaper is included in lower body to reduce turbulent flow characteristics. In the embodiment shown in FIG 3, flow shaper is generally U-shaped, but it may also be straight or otherwise adjusted. There is no need for an additional flow shaper to be added to piston. This absence of an additional flow shaper can be tolerated because in the embodiment shown in FIGS 3, 4, and 15, there is no fluid communication between the upper portion and the lower portion, as there may be for the embodiment shown in FIG 1. In this embodiment proportioning spool in the lower body, may take the place of flow shaper of valve shown in Fig 1.

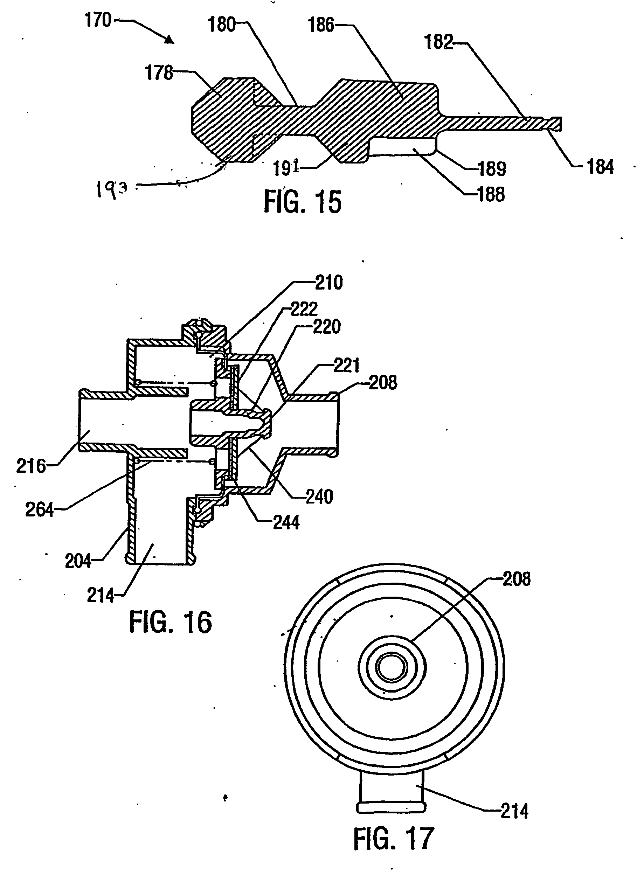

Pressure regulating valve as shown in FIG 3 also includes a proportioning spool that attaches at a first end to piston and extends through upper body and into lower body, where it passes through flow orifices which separate inlet from outlet. As proportioning spool travels with piston assembly, the flow orifices open and close. Proportioning spool is shown in detail in FIG 15 and includes a stem with a groove to facilitate attachment of first end to piston. The main body of proportioning spool may exhibit a slot or slots to reduce mass. In some embodiments, there are four fins that keep wall thickness uniform for molding and thus reduce the mass of proportioning spool. Main body may exhibit a channel to allow fluid communication between inlet and outlet and to connect the tapered areas of the proportioning spool. Proportioning spool may exhibit tapered areas to regulate the amount of flow passing through orifices.

Referring again to FIG 3, an O-ring held in place by an O-ring retainer seals the annulus between proportioning spool and upper body. A gap between a second end of proportioning spool and a flow orifice disposed in lower body allows for maximum fluid flow through fluid passageway in the full open position shown in FIG 3. Coiled compression spring biases piston and thus proportioning spool to the open position shown with tapered areas of proportioning spool in a position which allows maximum fluid flow through flow orifices and thus passageway.

The piston, diaphragm, relief valve assembly and other components of pressure regulating valve are identical to the corresponding components described for pressure regulating valve.

Operation of pressure regulating valve is as follows. During engine operation, as crankcase and vacuum source pressure varies, the force on piston correspondingly varies, this varying force is balanced by coiled compression spring which exerts a force equal in magnitude but opposite in direction to the force created by the crankcase and vacuum source pressure. As this occurs, piston and proportioning spool which is rigidly attached thereto advantageously position to increase or decrease the flow orifice areas, thus increasing or decreasing the fluid flow through fluid flow passageway. The increased or decreased flow through fluid passageway results in a regulated crankcase pressure. Piston and thus proportioning spool will self-adjust according to crankcase pressure, vacuum source pressure and the force supplied by coiled compression spring to maintain a substantially constant pressure in the crankcase. In the event of crankcase pressure exceeding the range pressure regulating valve is intended to operate under, integral relief valve assembly advantageously opens, i.e. fluid communication between fluid flow passageway and relief flow passageway is established through holes of piston. The seal between holes and sealing disk breaks as pressure on the piston increases sufficiently to overcome the force on relief disk provided by conical spring.

In an alternative embodiment shown in FIGS 16-17, piston does not include a separate insertable plug or flow shaper but instead comprises a single piece. Piston includes a head at first end where it meets conical spring and an integral flow shaper at second end. This alternative embodiment does not include the optional flow shapers of the other embodiments, but otherwise, the components, including the operation of relief valve, are identical to the embodiment shown in FIG 1.

In some applications, the pressures at which pistons are operable are as follows. Pistons may be biased in the open positions shown in the figures at atmospheric pressure, and may close proportionally at a pressure differential of approximately two to 10 inches of water. As crankcase pressure tends to increase, pistons will open until the full open position (shown) is reached at a pressure of approximately ten inches of water. At any pressures greater than ten inches of water, relief valves open and release the excess crankcase pressure. It will be understood by one of skill in the art with the benefit of this disclosure, however, that these pressure ranges are only exemplary, and that the springs and valves may be designed to meet any other pressure ranges as necessary.

## Claims

1. A pressure-regulating valve (2) for regulating pressure in a crankcase of an internal combustion engine, the pressure-regulating valve (2) comprising:
a body (4) with a fluid passageway (6) therethrough;
a movable piston (20) disposed within the body and movable in response to pressures thereon to adjust a fluid flow through the fluid passageway; and **characterised by**
a relief valve (22) integral to the piston, wherein at least one hole (52) in the piston is exposed to a relief fluid passageway (13) upon the application of a predetermined level of pressure on the piston.

2. The pressure-regulating valve of claim 1, further comprising a bonnet (8) coupled to the body (4) with the relief fluid passageway (13) therein.

3. The pressure-regulating valve of claim 2, further comprising a seal (10) between the bonnet and the body.

4. The pressure-regulating valve of claim 3, wherein the seal comprises a rolling diaphragm (10).

5. The pressure-regulating valve of any preceding claim, wherein movement of the moveable piston is adapted to regulate pressure by allowing varying volumes of fluid to pass through the fluid passageway.

6. The pressure-regulating valve of any preceding claim, further comprising a flow shaper (24) attached to the piston to alter flow through the fluid passageway.

7. The pressure-regulating valve of any preceding claim, wherein the relief valve comprises:
a plug (30) disposed within a channel of the piston;
a sealing disc (44) adjacent to the at least one hole in the piston
a relief disc (46) adjacent to the sealing disc ; and
a relief valve spring (40) disposed between the plug and the relief disc biasing the relief disc and the sealing disc to a closed, sealed position covering the at least one hole in the piston.

8. The pressure-regulating valve of any preceding claim, further comprising at least one biasing member (64) between the piston and the body, the at least one biasing member biasing the piston to an open position.

9. An internal combustion engine, comprising the pressure regulating valve of any one of the preceding claims.

10. The internal combustion engine of claim 9, wherein the internal combustion engine is a diesel engine.

11. A pressure regulating valve (2) and crankcase assembly comprising:
an upper body portion (105) in fluid communication (107) with a crankcase;
a lower body portion (103) isolated fluidly from the upper body portion and having a lower body fluid passageway (106) therethrough in communication with a crankcase and a vacuum source;
a movable piston (20) disposed within the upper body portion, wherein the piston is movable in response to pressure thereon to adjust a fluid flow through the lower body fluid passageway; and **characterised by**:
a spool (110) connected to the piston and extending through the upper body portion and to the lower body portion, and further including a relief valve (22) integral to the piston wherein at least one hole (52) in the piston is openable upon the application of a predetermined level of pressure on the piston.

12. The pressure regulating valve and crankcase assembly of claim 11, wherein the relief valve comprises:
a plug (30) disposed within a channel of the piston;
a sealing disc (44) adjacent to the at least one hole in the piston;
a relief disc (46) adjacent to the sealing disc; and
a relief valve spring (40) disposed between the plug and the relief disc biasing the relief disc and the sealing disc to a closed, sealed portion covering the at least one hole in the piston.

13. The pressure regulating valve and crankcase assembly of claim 11 or claim 12, further comprising a bonnet (8) coupled to the upper body with a relief fluid passageway therein.

14. The pressure regulating valve any crankcase assembly of any one of claim 13, further comprising a seal (10) between the bonnet and the upper body portion.

15. The pressure regulating valve and crankcase assembly of claim 14,
wherein the seal comprises a rolling diaphragm (10).

16. The pressure regulating valve and crankcase assembly of any one of claim 11 to 15, wherein the piston is adapted to regulate pressure by allowing varying volumes of fluid to pass through the lower body fluid passageway by altering the dimensions of a passageway gap between the spool and the lower body.

17. The pressure regulating valve and crankcase assembly of any of claims 11 to 16, further comprising a flow shaper (124) within the lower body portion facilitating fluid flow through the lower body fluid passageway.

18. The pressure regulating valve and crankcase assembly of any of claims 11 to 17, further comprising at least one spring (164) between the piston and the upper body portion, the at least one spring biasing the piston to an open position.

19. The pressure regulating valve and crankcase assembly of any one of claims 11 to 18, wherein the crankcase is of an internal combustion engine.

20. The pressure regulating valve and crankcase assembly of claims 19,
wherein the internal combustion engine is a diesel engine.

21. A method of regulating pressure in a crankcase of an internal combustion engine comprising:
providing a crankcase valve responsive to crankcase pressure, wherein changes in crankcase pressure are communicated to the crankcase valve;
adjusting a flow through the crankcase valve to correspondingly alter the crankcase pressure and **characterised by**:
releasing overpressure in the crankcase through a relief valve (22) integral to the crankcase valve upon application of a predetermined amount of pressure.

22. The method of claim 21, wherein the crankcase valve comprises:
a body with a fluid passageway (16) therethrough;
a movable piston (20) disposed within the body and the bonnet; wherein the piston is movable in response to pressure thereon to adjust a fluid flow through the body fluid passageway; and
a relief valve (22) integral to the piston wherein at least one hole (52) in the piston is exposed to the relief passageway upon the application of a predetermined level of pressure on the piston.

23. The method of claim 22, wherein the crankcase valve further comprises a bonnet (8) coupled to the body with a relief fluid passageway therein (13).

## Patentansprüche

1. Druckregulierendes Ventil (2) zum Regulieren des Drucks in einem Kurbelgehäuse eines Verbrennungsmotors, wobei das druckregulierende Ventil umfaßt:
einen Körper (4) mit einer hindurchgehenden Fluiddurchgangsbahn (6);
einen bewegbaren Kolben (20), der in dem Körper angeordnet und auf darauf einwirkende Drücke hin beweglich ist, um einen Fluidstrom durch die Fluiddurchgangsbahn einzustellen;
**gekennzeichnet durch**
ein Überdruckventil (22), das integral mit dem Kolben ist, wobei wenigstens ein Loch (52) in dem Kolben zu einer Überdruckfluiddurchgangsbahn (13) hin bei Einwirkung von Druck einer vorbestimmten Höhe auf den Kolben freiliegt.

2. Druckregulierendes Ventil nach Anspruch 1, ferner enthaltend eine Haube (8), die die Überdruckfluiddurchlaßbahn (13) in sich enthält und mit dem Körper (4) gekoppelt ist.

3. Druckregulierendes Ventil nach Anspruch 2, ferner enthaltend eine Dichtung (10) zwischen der Haube und dem Körper.

4. Druckregulierendes Ventil nach Anspruch 3, wobei die Dichtung eine Rollmembran (10) enthält.

5. Druckregulierendes Ventil nach jedem vorhergehenden Anspruch, wobei die Bewegung des beweglichen Kolbens in der Lage ist, Druck zu regulieren, indem variierende Volumina des Fluids durch die Fluiddurchgangsbahn strömen.

6. Druckregulierendes Ventil nach jedem vorhergehenden Anspruch, ferner enthaltend eine Strömungsformeinrichtung (24), die an dem Kolben befestigt ist, um den Strom durch die Fluiddurchgangsbahn zu verändern.

7. Druckregulierendes Ventil nach jedem vorhergehenden Anspruch, wobei das Überdruckventil enthält:
einen Zapfen (30), der in einem Kanal des Kolbens angeordnet ist;
eine Dichtungsscheibe (44) nahe dem wenigstens einen Loch in dem Kolben;
eine Entlastungsscheibe nahe der Dichtungsscheibe und
eine Überdruckventilfeder (40), die zwischen dem Zapfen und der Entlastungsscheibe angeordnet ist und die Entlastungsscheibe und die Dichtungsscheibe in eine geschlossene, abgedichtete Position zwängt, in der das wenigstens eine Loch in dem Kolben überdeckt ist.

8. Druckregulierendes Ventil nach jedem vorhergehenden Anspruch, ferner enthaltend wenigstens ein Vorspannselement (64) zwischen dem Kolben und dem Körper, wobei das wenigstens eine Vorspannelement den Kolben in eine offene Position vorspannt.

9. Verbrennungsmotor, enthaltend das druckregulierende Ventil nach jedem der vorhergehenden Ansprüche.

10. Verbrennungsmotor nach Anspruch 9, wobei der Verbrennungsmotor ein Dieselmotor ist.

11. Anordnung aus einem druckregulierenden Ventil (2) und einem Kurbelgehäuse enthaltend:
einen oberen Körperteil (105) in Fluidverbindung (107) mit einem Kurbelgehäuse;
einen unteren Körperteil (103), der hinsichtlich des Fluids von dem oberen Körperteil isoliert ist und eine Fluiddurchgangsbahn (106 enthält, die in Verbindung mit einem Kurbelgehäuse und einer Vakuumquelle steht;
einen beweglichen Kolben (20), der in dem oberen Körperteil angeordnet ist, wobei der Kolben als Reaktion auf einwirkenden Druck beweglich ist, um einen Fluidstrom durch die Fluiddurchgangsbahn des unteren Körpers einzustellen,
**gekennzeichnet durch**
einen Spulenkörper (110), der mit dem Kolben verbunden ist und sich durch den oberen Körperteil zu dem unteren Körperteil erstreckt, und
ferner ein Überdruckventil (22), das integral mit dem Kolben ist, wobei wenigstens ein Loch (52) in dem Kolben bei Einwirkung eines Drucks einer vorbestimmten Größe auf den Kolben geöffnet werden kann.

12. Anordnung aus einem druckregulierenden Ventil und einem Kurbelgehäuse nach Anspruch 11, wobei das Überdruckventil enthält:
einen Zapfen (30), der in einem Kanal des Kolbens angeordnet ist;
eine Dichtungsscheibe (44) nahe dem wenigstens einen Loch in dem Kolben;
eine Entlastungsscheibe (46) nahe der Dichtungsscheibe und
eine Überdruckventilfeder (40), die zwischen dem Zapfen und der Entlastungsscheibe angeordnet ist, und die Entlastungsscheibe und die Dichtungsscheibe zu einem geschlossenen, abgedichteten Teil zwängt, der das wenigstens eine Loch in dem Kolben überdeckt.

13. Anordnung aus einem druckregulierenden Ventil und einem Kurbelgehäuse nach Anspruch 11 oder 12, ferner enthaltend eine Haube (8), die mit dem oberen Teil gekoppelt ist und eine Überdruckfluiddurchgangsbahn enthält.

14. Anordnung aus einem druckregulierenden Ventil und einem Kurbelgehäuse nach Anspruch 13, ferner enthaltend eine Dichtung (10) zwischen der Haube und dem oberen Körperteil.

15. Anordnung aus einem druckregulierenden Ventil und einem Kurbelgehäuse nach Anspruch 14, wobei die Dichtung eine Rollmembran (10) aufweist.

16. Anordnung aus einem druckregulierenden Ventil und einem Kurbelgehäuse nach jedem der Ansprüche 11 bis 15, wobei der Kolben in der Lage ist, Druck zu regulieren, indem variierende Volumina des Fluids durch die Fluiddurchgangsbahn des unteren Teils fließen können, indem die Abmessungen des Durchlaßbahnspalts zwischen dem Spulenkörper und dem unteren Körper verändert werden.

17. Anordnung aus einem druckregulierenden Ventil und einem Kurbelgehäuse nach jedem der Ansprüche 11 bis 16, ferner enthaltend eine Strömungsformeinrichtung (124) in dem unteren Körperteil, die den Fluidstrom durch die Fluiddurchgangsbahn des unteren Körperteils erleichtert.

18. Anordnung aus einem druckregulierenden Ventil und einem Kurbelgehäuse nach jedem der Ansprüche 11 bis 17, ferner enthaltend wenigstens eine Feder (164) zwischen dem Kolben und dem oberen Körperteil, wobei die wenigstens eine Feder den Kolben in eine offene Position vorspannt.

19. Anordnung aus einem druckregulierenden Ventil und einem Kurbelgehäuse nach jedem der Ansprüche 11 bis 18, wobei das Kurbelgehäuse Teil eines Verbrennungsmotors ist.

20. Anordnung aus einem druckregulierenden Ventil und einem Kurbelgehäuse nach Anspruch 19, wobei der Verbrennungsmotor ein Dieselmotor.

21. Verfahren zum Regulieren des Drucks in einem Kurbelgehäuse eines Verbrennungsmotors, enthaltend:
Vorsehen eines Kurbelgehäuseventils, das auf Kurbelgehäusedruck anspricht, wobei Änderungen des Kurbelgehäusedrucks auf das Kurbelgehäuseventil einwirken;
Einstellen einer Strömung durch das Kurbelgehäuseventil, um entsprechend den Kurbelgehäusedruck zu verändern,
**gekennzeichnet durch**
Freigeben des Überdrucks in dem Kurbelgehäuse **durch** ein Überdruckventil (22), das integral mit dem Kurbelgehäuseventil ist, bei Einwirken eines Drucks einer vorbestimmten Größe.

22. Verfahren nach Anspruch 21**,** wobei das Kurbelgehäuseventil enthält:
einen Körper mit einer Fluiddurchgangsbahn (16);
einen beweglichen Kolben (20), der innerhalb des Körpers und der Haube angeordnet ist, wobei der Kolben als Reaktion auf einen darauf einwirkenden Druck beweglich ist, um einen Fluidstrom durch die Fluiddurchgangsbahn des Körpers einzustellen und
ein Überdruckventil (22), das integral mit dem Kolben ist, wobei wenigstens ein Loch (52) in dem Kolben bei Einwirken eines Drucks einer vorbestimmten Größe auf den Kolben zu der Überdruckdurchgangsbahn hin freiliegt.

23. Verfahren nach Anspruch 22, wobei das Kurbelgehäuseventil ferner eine Haube (8) aufweist, die mit dem Körper gekoppelt ist und eine Überdruckfluiddurchgangsbahn (13) in sich enthält.

## Revendications

1. Soupape de régulation de pression (2) pour réguler une pression dans un carter d'un moteur à combustion interne, la soupape de régulation de pression (2) comprenant :
un corps (4) comportant un passage de fluide (6) qui le traverse;
un piston mobile (20) disposé à l'intérieur du corps et mobile en réaction à des pressions qui lui sont appliquées pour régler un écoulement de fluide à travers le passage de fluide; et **caractérisée par** :
une soupape de détente (22) intégrée au piston, dans laquelle au moins un trou (52) dans le piston est exposé à un passage de fluide de détente (13) lors de l'application d'un niveau prédéterminé de pression sur le piston.

2. Soupape de régulation de pression selon la revendication 1, comprenant en outre un couvercle (8) couplé au corps (4) avec le passage de fluide de détente (13) dans celui-ci.

3. Soupape de régulation de pression selon la revendication 2, comprenant en outre un joint (10) entre le couvercle et le corps.

4. Soupape de régulation de pression selon la revendication 3, dans lequel le joint comprend un diaphragme rotatif (10).

5. Soupape de régulation de pression selon l'une quelconque des revendications précédentes, dans lequel le déplacement du piston mobile est adapté pour réguler la pression en permettant à des volumes de fluide différents de passer à travers le passage de fluide.

6. Soupape de régulation de pression selon l'une quelconque des revendications précédentes, comprenant en outre un configurateur d'écoulement (24) attaché au piston afin de modifier l'écoulement à travers le passage de fluide.

7. Soupape de régulation de pression selon l'une quelconque des revendications précédentes, dans lequel la soupape de détente comprend :
un bouchon (30) disposé à l'intérieur d'un canal du piston;
un disque d'étanchéité (44) situé à proximité dudit au moins un trou dans le piston;
un disque de détente (46) situé à proximité du disque d'étanchéité; et
un ressort de soupape de détente (40) disposé entre le bouchon et le disque de détente poussant le disque le détente et le disque d'étanchéité vers une position scellée fermée recouvrant ledit au moins un trou dans le piston.

8. Soupape de régulation de pression selon l'une quelconque des revendications précédentes, comprenant en outre au moins un élément de poussée (64) entre le piston et le corps, ledit au moins un élément de poussée poussant le piston vers une position ouverte.

9. Moteur à combustion interne, comprenant la soupape de régulation de pression selon l'une quelconque des revendications précédentes.

10. Moteur à combustion interne 9, dans lequel le moteur à combustion interne est un moteur diesel.

11. Soupape de régulation de pression (2) et ensemble de carter de moteur, comprenant :
une partie de corps supérieur (105) en communication par fluide (107) avec un carter de moteur;
une partie de corps inférieur (103) isolée sur le plan du fluide de la partie de corps supérieur et comportant un passage de fluide de corps inférieur (106) qui la traverse en communication avec un carter de moteur et une source de vide;
un piston mobile (20) disposé à l'intérieur de la partie de corps supérieur, dans lequel le piston se déplace en réaction à des pressions qui lui sont appliquées pour régler un écoulement de fluide à travers le passage de fluide de corps inférieur; et **caractérisée par** :
une bobine (110) connectée au piston et s'étendant à travers la partie de corps supérieur et jusqu'à la partie de corps inférieur, et comprenant en outre une soupape de détente (22 intégrée au piston, dans laquelle au moins un trou (52) dans le piston peut être ouvert lors de l'application d'un niveau prédéterminé de pression sur le piston.

12. Soupape de régulation de pression et ensemble de carter de moteur selon la revendication 11, dans lequel la soupape de détente comprend :
un bouchon (30) disposé à l'intérieur d'un canal du piston;
un disque d'étanchéité (44) situé à proximité dudit au moins un trou dans le piston;
un disque de détente (46) situé à proximité du disque d'étanchéité; et
un ressort de soupape de détente (40) disposé entre le bouchon et le disque de détente poussant le disque le détente et le disque d'étanchéité vers une position scellée fermée recouvrant ledit au moins un trou dans le piston.

13. Soupape de régulation de pression et ensemble de carter de moteur selon la revendication 11 ou la revendication 12, comprenant en outre un couvercle (8) couplé au corps supérieur avec un passage de fluide de détente dans celui-ci.

14. Soupape de régulation de pression et ensemble de carter de moteur selon la revendication 13, comprenant en outre un joint (10) entre le couvercle et la partie de corps supérieur.

15. Soupape de régulation de pression et ensemble de carter de moteur selon la revendication 14, dans lequel le joint comprend un diaphragme rotatif (10).

16. Soupape de régulation de pression et ensemble de carter de moteur selon l'une quelconque des revendications 11 à 15, dans lequel le piston est adapté pour réguler la pression en permettant à des volumes de fluide différents de passer à travers le passage de fluide de corps inférieur en modifiant les dimensions d'un espace de passage entre la bobine et le corps inférieur.

17. Soupape de régulation de pression selon l'une quelconque des revendications 11 à 16, comprenant en outre un configurateur d'écoulement (124) à l'intérieur de la partie de corps inférieur facilitant un écoulement de fluide à travers le passage de fluide de corps inférieur.

18. Soupape de régulation de pression et ensemble de carter de moteur selon l'une quelconque des revendications 11 à 17, comprenant en outre au moins un ressort (164) entre le piston et la partie de corps supérieur, ledit au moins un ressort poussant le piston vers une position ouverte.

19. Soupape de régulation de pression et ensemble de carter de moteur selon l'une quelconque des revendications 11 à 18, dans lequel le carter de moteur est le carter d'un moteur à combustion interne.

20. Soupape de régulation de pression et ensemble de carter de moteur selon la revendication 19, dans lequel le moteur à combustion interne est un moteur diesel.

21. Procédé de régulation de pression dans un carter d'un moteur à combustion interne, comprenant :
la fourniture d'une soupape de carter de moteur sensible à une pression de carter de moteur, dans lequel des variations de la pression de carter de moteur sont communiquées à la soupape de carter de moteur;
le réglage d'un écoulement à travers la soupape de carter de moteur afin de modifier de façon correspondante la pression de carter de moteur, et **caractérisé par** :
le relâchement d'une surpression dans le carter de moteur par l'intermédiaire d'une soupape de détente (22) intégrée à la soupape de carter de moteur lors de l'application d'une quantité prédéterminée de pression.

22. Procédé selon la revendication 21, dans lequel la soupape de carter de moteur comprend :
un corps comportant un passage de fluide (16) qui le traverse;
un piston mobile (20) disposé à l'intérieur du corps et du couvercle; dans lequel le piston se déplace en réaction à des pressions qui lui sont appliquées pour régler un écoulement de fluide à travers le passage de fluide; et
une soupape de détente (22) intégrée au piston, dans lequel au moins un trou (52) dans le piston est exposé à un passage de fluide de détente lors de l'application d'un niveau prédéterminé de pression sur le piston.

23. Procédé selon la revendication 22, dans lequel la soupape de carter de moteur comprend en outre un couvercle (8) couplé au corps avec un passage de fluide de détente (13) dans celui-ci.
